(19) Europäisches Patentamt
European Patent Office
Office européen des brevets

(11) **EP 3 209 832 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
*B61L 23/04* (2006.01)     *B61K 9/08* (2006.01)
*E01B 33/02* (2006.01)     *E01B 33/06* (2006.01)
*E01B 35/06* (2006.01)     *G01C 7/04* (2006.01)
*G06T 15/20* (2011.01)

(21) Anmeldenummer: **15793683.2**

(22) Anmeldetag: **19.10.2015**

(86) Internationale Anmeldenummer:
**PCT/AT2015/050261**

(87) Internationale Veröffentlichungsnummer:
**WO 2016/061602 (28.04.2016 Gazette 2016/17)**

(54) **VERFAHREN ZUR MESSUNG UND DARSTELLUNG DER GLEISGEOMETRIE EINER GLEISANLAGE**

METHOD FOR MEASURING AND DISPLAYING THE TRACK GEOMETRY OF A TRACK SYSTEM

PROCÉDÉ PERMETTANT DE MESURER ET DE REPRÉSENTER LA GÉOMÉTRIE DES RAILS D'UNE VOIE FERRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2014 AT 507582014**

(43) Veröffentlichungstag der Anmeldung:
**30.08.2017 Patentblatt 2017/35**

(73) Patentinhaber: **HP3 Real GmbH**
**1010 Wien (AT)**

(72) Erfinder: **LICHTBERGER, Bernhard**
**4230 Pregarten (AT)**

(74) Vertreter: **Patentanwaltskanzlei Hübscher**
**Spittelwiese 4**
**4020 Linz (AT)**

(56) Entgegenhaltungen:
**DE-A1- 3 227 724      US-A1- 2006 032 063**
**US-A1- 2012 300 060**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung bezieht sich auf ein Verfahren zur Messung und Darstellung der Gleisgeometrie einer Gleisanlage mit einer gleisfahrbaren Oberbaumaschine mit einer Steuermessanlage zum Messen der zu korrigierenden Gleislage vor einer Hebe- Richteinrichtung, mit einer Abnahmemessanlage zum Vermessen der korrigierten Gleislage nach der Hebe- Richteinrichtung und mit zugeordneten Ausgabeeinheiten zur Darstellung der Messwerte, wobei die Hebe- Richteinrichtung in Abhängigkeit der Messwerte von Steuermessanlage und Abnahmemessanlage im Sinne eines Erzielens einer vorgegebenen Gleis-Soll-Geometrie angesteuert wird, die insbesondere in Form eines Krümmungsbildes, eines Längshöhenbildes und eines Überhöhungsbildes vorgegeben wird.

Stand der Technik

Ein solches Verfahren ist aus dem Dokument DE 32 27 724 A1 bekannt.

Die meisten Eisenbahngleise sind als Schotteroberbau ausgeführt. Die Schwellen liegen dabei im Schotter. Der Schotter hat die Aufgabe der Ableitung der Radkräfte ins Planum, die Aufnahme von Querkräften die auf die Schiene und Schwelle wirken und die Ableitung des Oberflächenwassers. Durch die wirkenden Radkräfte der darüberfahrenden Züge werden unregelmäßige Setzungen im Schotter und Verschiebungen der seitlichen Lagegeometrie des Gleises hervorgerufen. Durch die Setzungen des Schotterbettes treten Fehler in der Längshöhe, der Überhöhung (im Bogen), der Verwindung und der Richtlage auf.

Werden bestimmte von den Bahndirektionen festgelegte Komfortgrenzwerte oder Sicherheitsgrenzwerte dieser geometrischen Größen überschritten, dann werden Instandhaltungsarbeiten geplant und zeitgerecht durchgeführt. Werden festgelegte Gefahrengrenzwerte überschritten, dann wird abhängig von der Größe der Fehler die Geschwindigkeit reduziert oder das Gleis gesperrt und die Behebung dieser so genannten Einzelfehler sofort durchgeführt. Die Behebung und Berichtigung dieser geometrischen Gleisfehler wird üblicherweise mit Gleisbaumaschinen durchgeführt. Zur Steuerung des Prozesses gibt es Messsysteme zur Erfassung der aktuellen Gleislage für die Parameter Richten, Heben, Verwindung und Querneigung.

Damit das Gleis nach derartigen Gleisgeometrieverbesserungsarbeiten wieder dem Betrieb frei gegeben werden kann, sind die Oberbaumaschinen mit sogenannten Abnahmemessanlagen und Abnahmeschreiberanlagen ausgestattet. Für die Qualität der Gleislage nach der Verbesserung durch Oberbaumaschinen oder sonstige Methoden haben die Bahnverwaltungen sogenannte Abnahmetoleranzen festgelegt. Diese stellen die Mindestanforderungen der Qualität der erzeugten geometrischen Verbesserungen dar. Nachgewiesen werden diese durch die Abnahmemessanlagen und Abnahmeschreiberanlagen. Die aufgezeichneten Ergebnisse stellen amtliche sicherheitsrelevante Dokumente dar. Daher sind derartige Abnahmemessanlagen und Abnahmeschreiberanlagen einer regelmäßigen Kalibrierung und einer Abnahme durch autorisierte Stellen zu unterziehen. Die dabei zu nennenden, zu berichtigenden und aufzuzeichnenden Größen sind, die Verwindung des Gleises, die Längshöhe des Gleises, die Richtung oder Seitenlage des Gleises, die Spurweite und die Querneigung oder Überhöhung des Gleises.

Die Sollgeometrien der Eisenbahngleise stehen als Gleispläne zur Verfügung und können nach Eingabe in den Steuercomputer zur Berechnung der systematischen Fehler unter Kenntnis des Verhaltens der Messsysteme benutzt werden. Auf Gleisbaumaschinen gibt es den Vorwagenführer, der für die Steuerung der Maschine bezüglich der Soll-Geometrie und auch bezüglich der Abnahme durch den Datenrecorder verantwortlich ist. Bei einem Fehler, den der Abnahmeschrieb zeigt, muss mit der Maschine z.B. zurückgefahren und der Fehler ausgebessert werden, damit die Abnahmetoleranzen eingehalten werden.

Dem Vorwagenführer von Gleisbaumaschinen wird die Gleisgeometrie nach dem heute üblichen Verfahren in Form von Krümmungsverläufen des Gleises über der Bogenlänge dargestellt. Die Darstellung erfolgt visuell auf einem Computerbildschirm in Form von Diagrammen. Auf einem getrennten, zusätzlichen Schirm werden dem Maschinenführer Diagramme dargestellt, die die Abweichungen der einzelnen Parameter von der Soll-Lage darstellen. Nach dem bisher üblichen Verfahren kann der Maschinenführer abhängig von diesen Abweichungen zusätzlich Korrekturwerte eingeben. Zum Beispiel kann er, wenn das Gleis zurückfedert, das Gleis durch die Maschinen etwas überdrücken lassen. Die Auswirkung des Korrekturwertes ist aber, da der Abnahmeschreiber die Gleislage erst etwa 10m nach der Stelle der Bearbeitung der Gleislage aufzeichnet, nur verzögert in ihren Auswirkungen sichtbar.

Die Darstellung als Krümmungsbild, Längsneigungsbild und Überhöhungsbild ist abstrakt und für die Maschinenbediener nicht allgemein verständlich. Die Sicht aus dem Frontfenster der Maschine, welches eine reale Gleislage zeigt, deckt sich nicht mit dem dargestellten mathematischen abstrakten Computerbild auf dem Bildschirm. Dieses gängige Verfahren stellt daher komplexe Anforderungen an den Maschinenführer, die gegebenen Informationen sind unübersichtlich, schwer zu verstehen und führen deshalb leicht zu Bedienungsfehlern. Erschwert wird das Ganze nicht nur durch die zwei unabhängigen Computer, für die Führung nach der Gleis-Soll-Lage und den digitalen Abnahmeschreiber, sondern auch noch dadurch, dass die Darstellungsachsen der Messschriebe zwischen Maschinenführungscomputer und Abnahmecomputer üblicherweise genau verkehrt dargestellt sind.

Die Aufzeichnung von geometrischen Gleislagen erfolgt heute standardmäßig meist mit asymmetrischen Sehnenmesssystemen (Sehnenabschnitte a, b). Dabei wird zwischen einem vorderen und einem hinteren einseitig an das Gleis angepressten Messwagen mittig eine Stahlsehne gespannt. Zwischen diesen Spannwagen wird ein Messwagen angeordnet und einseitig angepresst. Der Messwagen trägt eine Abtastvorrichtung die die Position der Stahlsehne aus der Mittenlage misst. Dieser Wert wird als Pfeilhöhe bezeichnet. Für die Richtung werden die Wagen bogenaußen angepresst. Für die Höhe wird die Bogeninnenschiene als Referenz genutzt. Das Soll-Krümmungsbild wird mit Hilfe der folgenden Pfeilhöhenformel in ein Soll-Pfeilhöhenbild (proportional dem Krümmungsbild) umgerechnet.

$$f = \frac{a \cdot b}{2\,R}$$

Bei der Messung wird der Verlauf der so errechneten Soll-Pfeilhöhe mit der gemessenen Ist-Pfeilhöhe verglichen und die Differenz aufgezeichnet. Für diese Differenzen sind von den Eisenbahnverwaltungen Abnahmegrenzwerte vorgegeben. Diese Vorgangsweise wird auch für das Längsneigungs-Krümmungsbild analog angewendet. Die Überhöhung kann über die Schwerachse als Bezug direkt angegeben und über Pendel oder andere Neigungsmesser gemessen und die Abweichungen durch Vergleich mit den Soll-Überhöhungen angegeben werden. Auch für die Überhöhungsabweichungen gelten Abnahmegrenzwerte. Pfeilhöhenmessungen unterliegen einer so genannten Übertragungsfunktion, das heißt, die Verstärkung und Phasenlage der gemessenen Fehler sind wellenlängenabhängig und entsprechen nur qualitativ den wirklichen Gleisgeometriefehlern.

Darstellung der Erfindung

Der Erfindung liegt somit die Aufgabe zugrunde, ein Verfahren der eingangs geschilderten Art anzugeben, mit dem die Soll-Gleisgeometrie, die Ist-Gleisgeometrie und die durch die Arbeitsungenauigkeit entstandenen Abweichungen von der Gleis-Sollgeometrie derart übersichtlich dargestellt werden, dass Fehlbedienungswahrscheinlichkeiten der Maschine verringert werden und eine intuitive Steuerung der Maschine ermöglicht wird.

Die Erfindung löst die gestellte Aufgabe dadurch, dass zunächst aus dem Krümmungsbild, dem Längshöhenbild und dem Überhöhungsbild der Gleis-Soll-Geometrie ein dreidimensionales Lagebild errechnet wird, dass das dreidimensionale Lagebild in eine perspektivische Darstellung gebracht und mit der Ausgabeeinheit dargestellt wird und dass das perspektivische Lagebild um die gemessenen Fehlerverläufe für die Gleisparameter Gleisrichtung, Überhöhung, Verwindung und Längshöhe ergänzt wird.

Die Soll-Gleisgeometrie, die Ist-Gleisgeometrie und die durch die Arbeitsungenauigkeit entstandenen Abweichungen von der Gleis-Sollgeometrie werden ebenso, wie die die Auswirkungen eines Korrektureingriffes durch den Maschinenführer perspektivisch in einem Bild dargestellt, das sich im Wesentlichen mit dem Blick aus seinem Fenster in Arbeitsrichtung deckt. Zudem können in dieses perspektivische Bild bestimmte Gleismarken (Synchropunkte) wie Weichenpositionen, Brückenpositionen oder Bogenhauptpunkte (Positionen im Gleis bei denen sich das Richtungskrümmungsbild, das Längsneigungsbild oder das Überhöhungsbild ändert) eingezeichnet werden. Dazu werden der Gleis-Soll-Geometrie Synchropunkte zugeordnet, die an den entsprechenden Positionen der perspektivischen Darstellung des Gleisverlaufes dargestellt werden, wobei bei Erreichen der Synchropunkte mit der Oberbaumaschine eine Synchronisation der tatsächlichen Synchropunkte an der Gleisanlage mit den virtuellen Synchropunkten der perspektivischen Darstellung erfolgt.

Die Position der Oberbaumaschine in der Darstellung der Ausgabeeinheit und die Darstellung der aktuellen Fehlerwerte erfolgt mit Fortfahren der Maschine fortlaufend. Damit deckt sich der Blick des Maschinenführers aus seinem Fenster in Arbeitsrichtung stets im Wesentlichen mit der perspektivischen Darstellung. Der Verlauf der Restfehler wird abhängig von den gemessenen Fehlerverläufen und den getätigten Regelungseingriffen vorberechnet und in der perspektivischen Darstellung ebenfalls sichtbar gemacht.

Zudem kann die Gleislage vor der Oberbaumaschine mit einer Bildaufnahmeeinrichtung aufgezeichnet werden, kann die Lage der Schienen mit einer Bildauswertung berechnet werden und kann die berechnete Lage der Schienen und die Gleis-Soll-Geometrie perspektivisch im Lagebild dargestellt werden. Der Maschinenführer kann somit auf ihn zukommende, erforderliche Korrektureingriffe bereits von vorne herein berücksichtigen. Dazu empfiehlt es sich, wenn der Verlauf der Abweichungen der zu korrigierenden Gleislage von der Sollage berechnet wird und wenn Trends errechnet und auf der Ausgabeeinheit zur Anzeige gebracht werden, um durch eine zeitgerechte Einflussnahme auf die Hebe-Richteinrichtungen ein Einhalten von Toleranzen gewährleisten zu können.

Korrekturen von errechneten Abweichungen, der zu korrigierenden Gleislage von der Sollage vor der Hebe-Richteinrichtung, können von einer Steueranlage der Hebe- Richteinrichtung automatisiert vorgenommen werden.

Da die Oberbaumaschinen die Bogenlänge meist über Odometer messen und diese auf Grund des Schlupfes, Verschmutzung des Rades etc. geringe Ungenauigkeiten aufweisen, wird die Maschine an den Synchropunkten mit der Soll-Bogenlänge synchronisiert. Dazu können Synchropunkte vor der Oberbaumaschine mit einer Bildaufnahmeeinrichtung aufgezeichnet werden und in das perspektivische Bild ab einer vorzuwählenden Annäherung zur Synchronisierung eingeblendet werden. Durch die Synchronisierung wird eine Aufsummierung der Bogenlängenmessfehler vermieden. Die Synchronisierung kann manuell oder automatisiert erfolgen.

Erfindungsgemäß wird die durch Krümmungsbilder für die Seitenlage, Längsneigungsbilder für die Höhenlage und Überhöhungsbilder für die Gleisüberhöhung vorgegebene Gleissollgeometrie in eine dreidimensionale Raumkurve umgerechnet und die Gleissollgeometrie in weiterer Folge perspektivisch visuell, auf einem Bildschirm od. dgl., dargestellt. Die erfassten Abweichungen der erzeugten Gleislage von der Soll Lage werden in das perspektivische Bild eingetragen und zur Berichtigung über die Steuerung entweder in einem Automatikmode oder einem manuellen Mode benutzt. Synchronisationspunkte des Gleises, die zur Synchronisation der gemessenen Bogenlänge der Gleisbaumaschine mit der tatsächlichen Bogenlänge dienen, werden ebenfalls hinsichtlich ihrer Lage perspektivisch dargestellt, ebenso wie andere wichtige Gleispunkte wie Weichen, Brücken, Bahnübergänge etc.

Eine automatische Korrektur der Rest-Gleisgeometriefehler kann z.B. durch die Berechnung der Mittelwerte der aufgezeichneten Fehler der Längshöhe, der Richtung und der Überhöhung (z.B. über die vergangenen 10m) erfolgen, indem der Mittelwert der jeweiligen Fehler an die Steuerung der Oberbaumaschine zur Korrektur (Feedbackschleife) zurückgegeben wird. Liegt z.B. der Mittelwert des Überhöhungsfehlers bei -2mm, dann wird durch die Oberbaumaschine die überhöhte Seite um 2 mm höher angehoben um diesen Fehler auszugleichen. Analog gilt dies auch für die anderen Messgrößen.

Das perspektivische Bild kann über einen Head-Up-Projektor auf die Frontscheibe der Oberbaumaschine geworfen und/oder das mit einer Datenbrille dargestellt werden. Zudem kann das perspektivische Bild über eine Funk-Datenleitung an eine räumlich vom Einsatzort der Oberbaumaschine entfernte Leitstelle zur Überwachung des Arbeitsfortschrittes übertragen werden, wobei die Arbeiten gegebenenfalls von der Leitstelle ferngesteuert erfolgen.

## Kurze Beschreibung der Zeichnung

In der Zeichnung ist der Erfindungsgegenstand beispielsweise dargestellt. Es zeigen

Fig. 1    eine Monitordarstellung eines Krümmungs-Sollbildes, eines Überhöhungsbildes und eines Längsneigungsbildes, sowie der Synchropunkte gemäß des Standes der Technik,

Fig. 2    eine Darstellung eines Monitorbildes einer Messaufzeichnung nach einer durchgeführten Instandhaltungsarbeit gemäß des Standes der Technik,

Fig. 3    eine erfindungsgemäße perspektivische Darstellung der Gleisgeometre, der verbliebenen Gleisfehler und der Synchropunkte,

Fig. 4    ein Ortsbild einer Gleislage im Grundriss mit asymmetrischer Sehnenmessung,

Fig. 5    eine Darstellung einer Gleislage im Grundriss mit Angabe des Krümmungsradius, des Gleisbogenwinkels und anliegender Tangente,

Fig. 6    eine Darstellung der Zusammensetzung der dreidimensionalen Darstellungskoordinaten aus Grundriss, Höhenlage und Überhöhung und

Fig. 7    eine Detaildarstellung der Zusammensetzung der dreidimensionalen Darstellungskoordinaten aus Grundriss, Höhenlage und Überhöhung.

## Weg zur Ausführung der Erfindung

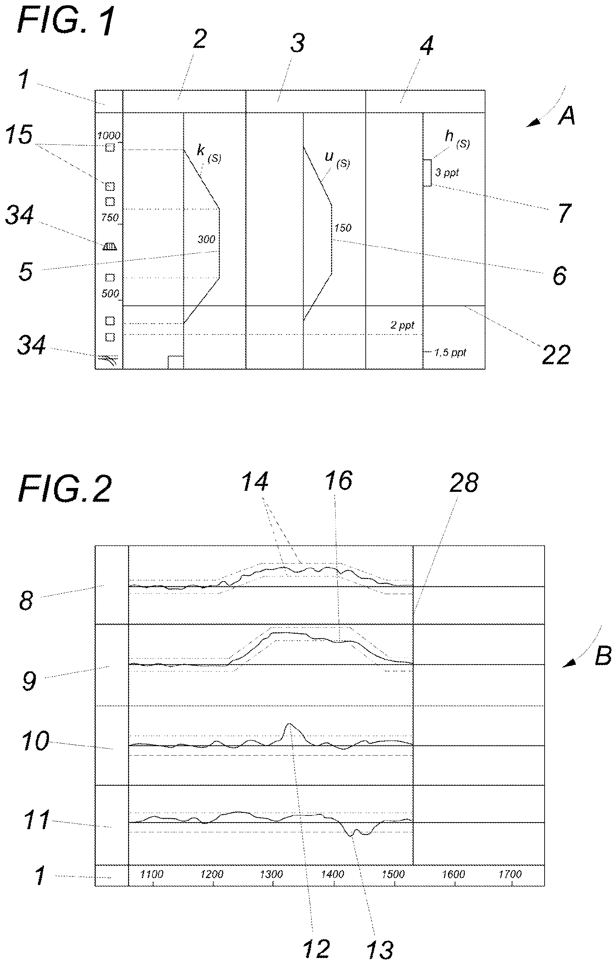

Fig. 1 zeigt beispielhaft eine schematische Monitordarstellung A eines Gleisgeometriecomputers, gemäß des Standes der Technik. In der ersten Spalte 1 wird die Kilometrierung der Bogenlänge angegeben. Die nächste Spalte 2 zeigt den Verlauf des so genannten Krümmungsbildes k(s). Die Krümmung 5 entspricht dem Kehrwert des Gleisradius $1/R_i$. Damit beim Befahren von Gleisen aus der Geraden heraus in einen Gleisbogen hinein kein zu hoher Ruck entsteht, werden so genannte Übergangsbogen ausgeführt. Die einfachste Form des Übergangsbogens ist der lineare Übergangsbogen, bei welchem die Krümmung mit der Bogenlänge stetig zunimmt bis sie die Krümmung erreicht hat, die dem Gleisradius entspricht. Für den Verlauf der Krümmung des linearen Übergangsbogens gilt:

$$k = \frac{s}{L} \cdot \frac{1}{R} \qquad f\ddot{u}r\ k = 0\ \ bis\ k = \frac{1}{R}$$

Im Grundriss stellt der lineare Übergangsbogen eine Klothoide dar. Neben diesem Übergangsbogen gibt es auch noch andere Ausführungen, wie den so genannten Bloss-Übergangsbogen, mit einem Krümmungsverlauf nach der Gleichung:

$$k = 3 \cdot \left(\frac{s}{L}\right)^2 - 2 \cdot \left(\frac{s}{L}\right)^3$$

Auch cosinus- oder sinusförmige, sowie biquadratische (Helmert) Übergangsbögen und andere Formen sind bekannt. Eigen ist allen, dass zur Ermittlung kartesischer Koordinaten für den Grundriss analytische Methoden nicht angewandt werden können, sondern Näherungsmethoden oder numerische Methoden verwendet werden müssen. Die Darstellung Krümmung über der Bogenlänge k(s) bedarf für die Präsentation in einem kartesischen Koordinatensystem der zweifachen Integration.

Die nächste Spalte 3 zeigt den Verlauf der Überhöhung 6 u(s). Die Überhöhung wird in der Regel in mm angegeben. Sie ist das Maß, um welches die bogenäußere Schiene gegenüber der Bogeninnenschiene als Referenz angehoben verlegt wird.

Die letzte Spalte 4 zeigt das Längsneigungsbild h(s) 7, welches ebenfalls als Krümmungsbild angegeben wird. Da die Neigungen bei der Eisenbahn relativ gering sind, sind für die Längshöhe keine Übergangsbögen notwendig. Meist kommen nur geringe oder keine Ausrundungen des Überganges von einer Neigung in eine andere statt. In der Spalte 1 werden auch Synchronpunkte an den Bogenhauptpunkten 15 oder für besondere Stellen wie für Brücken 34 oder Weichen 34 symbolhaft dargestellt. Während der Arbeit wird die Position der Maschine 22 in der Geometrie durch einen waagrechten Strich dargestellt.

Fig. 2 stellt schematisch den Monitorschirm B eines digitalen Aufzeichnungsrecorders der geometrischen Gleislage gemäß des Standes der Technik nach der Gleislageberichtigungsarbeit dar. Die unterste Zeile 1 zeigt die Kilometrierung (Bogenlänge). In der obersten Zeile 8 ist der Verlauf der gemessenen Pfeilhöhe (Richtung) dargestellt und rund um diesen Messwert die zulässigen Toleranzen 14. Werden diese Toleranzen überschritten dann wird der Maschinenführer über ein Signal gewarnt. Die zweite Zeile 9 von oben stellt den Verlauf der gemessenen Überhöhung und die Toleranzlinien dar. In 16 liegt eine Überschreitung nach unten vor. In diesem Fall muss die Maschine zurücksetzen und diesen Bereich noch einmal berichtigen bis die Toleranzen passen. Die dritte Zeile von oben 10 zeigt den Verlauf der Längshöhe mit den Toleranzlinien. Auch hier liegt in 12 eine Überschreitung vor. Schließlich wird in der vierten Spalte von oben 11 eine aus der Überhöhung abgeleitete Größe - die Verwindung - dargestellt. Die Verwindung ist eine Größe, die wegen ihrer Bedeutung für die Entgleisungssicherheit besonders sicherheitskritisch ist. Die gezeigte Überschreitung in 13 erfordert eine Nachbearbeitung durch die Stopfmaschine. Die Position der senkrechten Linie 28 stellt die Position der aktuellen Messaufzeichnung dar.

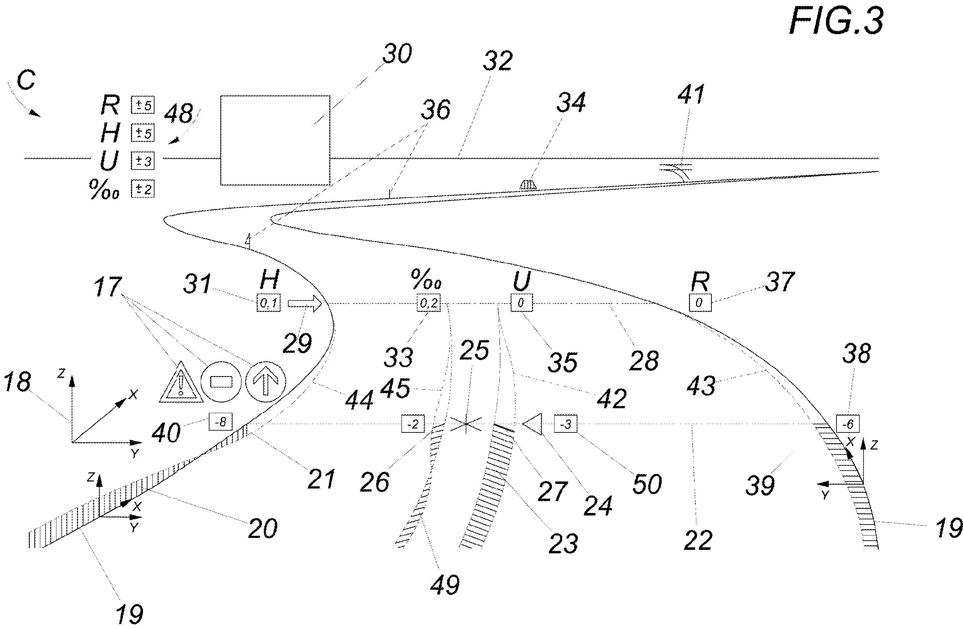

Fig. 3 stellt das erfindungsgemäße perspektivische Bild der Maschinenführung dar. Die vorbeschriebenen zwei Monitorbilder für den Gleislagecomputer A und Abnahmeschreiber B in Krümmungsbildern über der Bogenlänge werden in ein Bild in Form einer perspektivischen Abbildung der Gleislage integriert. Aus den Gleissollgeometrievorgaben, aus Krümmungsbild $k_{(s)}$, 2, Längshöhenbild $h_{(s)}$, 4 und Überhöhungsbild $u_{(s)}$, 3 der Gleis-Soll-Geometrie wird ein dreidimensionales Lagebild errechnet. Das dreidimensionale Lagebild 19 wird in eine perspektivische Darstellung gebracht und mit der Ausgabeeinheit dargestellt. Zudem wird das perspektivische Lagebild um die gemessenen Fehlerverläufe für die Gleisparameter Gleisrichtung 39, Überhöhung 23, Verwindung 49 und Längshöhe 20 ergänzt. Es wird also eine räumliche Sollkurve in kartesischen Koordinaten berechnet und dieses in eine perspektivische Darstellung umgerechnet und präsentiert. 19 zeigt die berechnete Spur der Soll-Lage des Gleises. Mit 29 wird symbolisch die Arbeitsposition der Maschine dargestellt. 28 zeigt die aktuelle Position der Oberbaumaschine. 22 zeigt die Position der Schreiberaufzeichnung. 20 stellt die Abweichung der Längshöhe von der Gleis-Soll-Höhenlage dar. 21 zeigt die aktuelle letzte Abweichung. Der Wert dieser Abweichung wird im Feld 40 angegeben. 31 zeigt den vorhergesagten Wert, der sich durch die Korrektur einstellen würde. Die Linie 44 zeigt den vorherberechneten Verlauf bei einer manuellen Einflussnahme des Maschinenführers über das Kompensationspotentiometer. Im automatischen Mode würde der Computer die notwendige Korrektur selbst errechnen und vornehmen. 48 zeigt die erlaubten Grenzwerte für die gemessenen Abnahmeparameter. R steht für die Abweichung der Richtlage in mm, H für die Abweichungen der Höhenlage in mm, u für die Abweichungen der Überhöhung in mm und %o für den zulässigen Grenzwert der Verwindung in Promille. Die Linie 39 gibt bezogen auf die Sollkurve des Gleises die horizontalen Gleislageabweichungen an. In 38 wird die an der aktuellen Messstelle vorhandene Abweichung zahlenwertmäßig ausgegeben. 43 ist wieder der Verlauf der vorherberechneten Kurve bei einer manuellen oder automatischen Korrektur. In 37 wird der vorherberechnete Wert der Abweichung angegeben. 23 stellt die Abweichung der Überhöhung dar. Der Winkel der Schraffur gibt an, ob es ein Überhöhungsfehler nach oben oder nach unten ist. Daneben 50 ist die aktuelle Abweichung zahlenmäßig dargestellt. 24 stellt als Symbol die Überhöhung dar. Da es sich um einen Linksbogen handelt ist die rechte Schiene überhöht. Die Abweichung der Richtlage wird dabei immer an der bogenäußeren Schiene gezeigt und die Längshöhe an der bogeninneren Schiene, da diese die Referenzschiene für die Höhe ist. 42 ist wieder die vorhergesagte Kurve der Entwicklung des Überhöhungsfehlers bei entsprechender manueller oder automatischer Korrektur. 35 ist der Wert der sich bei der Nachmessung voraussichtlich ergeben würde. 27 ist die aktuelle Abweichung der Überhöhung an der Messstelle.

49 stellt die Abweichungskurve der Verwindung dar. 25 ist das Symbol für die Verwindung. 26 ist die aktuelle Abweichung an der Messstelle. 45 ist wieder die vorherberechnete Kurve des manuellen bzw. automatischen Korrektureingriffs. 33 ist der Wert, der sich bei den aktuellen Korrekturwerten an der Arbeitsstelle ergeben würde. Bei einer Überschreitung eines der Grenzwerte der Abnahmekurven oder wenn der Verlauf der Abnahmekurven zufriedenstellend ist erscheint eines der Zeichen 17. Das Symbol rechts würde dabei für einen tadellosen Verlauf stehen, dass mittlere würde eine unzulässige Überschreitung der Toleranzen darstellen, während das ganz linke dafür stehen würde, dass der Trend der Abweichung auf eine baldige Überschreitung der Grenzwerte hindeutet. Mit 36 sind die Synchropunkte der Bogenhauptpunkte markiert. Andere mögliche Synchropunkte wie eine Brücke 34 oder eine Weiche 41 sind in "sprechender" Weise dargestellt. 32 zeigt den Horizont. Nähert sich die Maschine bis auf einen voreingestellter Grenzwert einem Synchropunkt (z.B. 5m), so erfolgt eine optische und/ oder akustische Warnung und das Bild der Synchropunkt-Videokamera wird in 30 eingeblendet. Die Synchronisierung erfolgt durch den Maschinenführer mit Hilfe des Videobildes oder durch Blick aus dem Fenster manuell über einen Taster. Die Synchropunkte sind in der Regel an der Schiene gekennzeichnet. Befindet sich der vordere Spannwagen exakt über dem Synchropunkt, wird synchronisiert. Perspektivisch wird das Bild C aus leichter Vogelperspektive dargestellt mit einem beiden Schienen gemeinsamen Fluchtpunkt im Unendlichen. Der Schienenverlauf wird dabei nur bis zu einer endlichen Länge (z.B. 50m) berechnet und dargestellt.

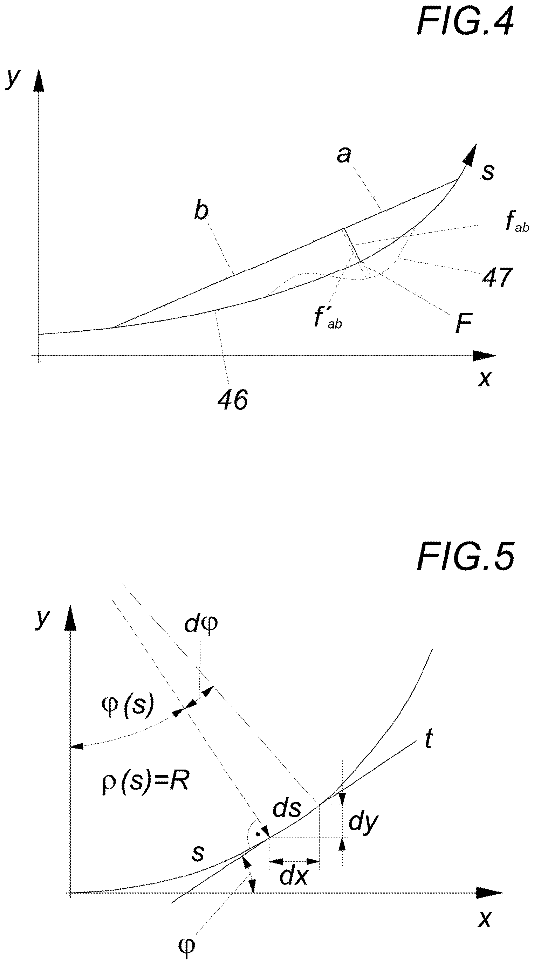

Fig. 4 stellt einen Bogen 46 im Grundriss dar. Üblich sind bei Oberbaumaschinen zur Messung der Gleislage so genannte Pfeilhöhenmessverfahren. Dabei wird eine Sehne (a, b) der Länge I = a+b auf der Schiene über Messwagen entlang des Bogens (Bogenlänge s) geführt. 47 zeigt einen Gleisfehler. Die errechnete Soll-Pfeilhöhe $f_{ab}$ wird durch die Maschine mit der gemessenen Pfeilhöhe $f'_{ab}$ verglichen. Daraus ergibt sich die Abweichung F die mit der Maschine durch entsprechendes Richten ausgeglichen wird. Üblicherweise werden asymmetrische Sehnen mit den Abschnittslängen a und b eingesetzt. Die Pfeilhöhe ergibt sich dann zu

$$f = \frac{a \cdot b}{2\,R}$$

Fig. 5 zeigt schematisch einen Bogen 46 im Grundriss (x, y - Koordinaten) und den Zusammenhang zwischen Bogenwinkel φ und Bogenmaß s. Für die Berechnung der koordinativen Darstellung gelten die folgenden, mathematischen Zusammenhänge:

$$\varphi(s) = \int \frac{1}{\rho(s)}\,ds = \int k(s)\,ds$$

$$dx = \cos\varphi(s)\,ds$$

$$dy = \sin\varphi(s)\,ds$$

$$x = \int_{s1}^{s2} \cos\varphi(s)\,ds = \int_{s1}^{s2} \cos\left\{\int_{s1}^{s2} k(s)ds\right\}ds$$

$$y = \int_{s1}^{s2} \sin\varphi(s)\,ds = \int_{s1}^{s2} \sin\left\{\int_{s1}^{s2} k(s)\,ds\right\}ds$$

Da die Integrale in der Regel nicht analytisch lösbar sind werden diese numerisch berechnet. k(s) stellt dabei den Krümmungsverlauf im Grundriss dar. Für die Höhenlage wird analog vorgegangen - der Höhenverlauf wird auf die y, z - Ebene projiziert. Die Überhöhung kann direkt berechnet (da als u(s) gegeben) und zur z-Achse der Referenzschiene (immer bogenäußere Schiene) dazu addiert werden. Die Schienen haben den Abstand d (d = Spurweite, Normalspur = 1435 mm).

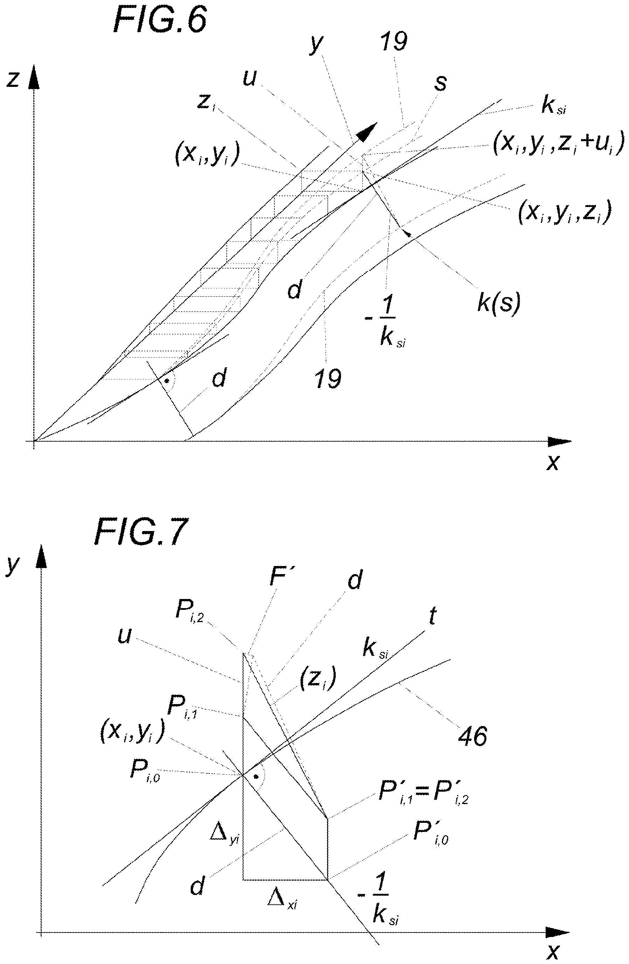

Fig. 6 zeigt wie sich aus Grundriss (in der x, y - Ebene), dem Höhenriss (y, z - Ebene), der Überhöhung u und der Spurweite d der dreidimensionale Verlauf der Schienen errechnen lässt.

Fig. 7 stellt die Zusammensetzung im Detail dar. Ein berechneter Punkt ($P_{i,0}$) mit den Koordinaten ($x_i$, $y_i$) in der x, y - Ebene wird durch die z-Koordinate aus dem Höhenriss zum dreidimensionalen Punkt $P_{i,1}$ mit den Koordinaten ($x_i$, $y_i$, $z_i$) ergänzt. Da es sich um einen Rechtsbogen handelt, ist die Überhöhung u auf der linken Schiene aufzutragen. Es ergibt sich der Punkt $P_{i,2}$ mit den Koordinaten ($x_i$, $y_i$, $z_i + u_i$). Senkrecht ($-1/k_{si}$) auf die Tangente t (Steigung $k_{si}$) im Grundriss wird die Spurweite d abgetragen dadurch ergibt sich für die Parallelschiene der Punkt $P'_{i,0}$ mit den Koordinaten ($x'_i$, $y'_i$). Um den dreidimensionalen Punkt $P'_{i,1}$ zu erhalten, wird mit der z-Koordinate zu ($x'_i$, $y'_i$, $z'_i$) ergänzt. Bei exakter Rechnung steht die (bogenäußere) Überhöhung nicht senkrecht auf die x, y - Ebene sondern leicht schräg (max. etwa 6°). Diese Abweichung F' ist für die perspektivische Darstellung ohne Belang und wird daher vernachlässigt.

**Patentansprüche**

1. Verfahren zur Messung und Darstellung der Gleisgeometrie einer Gleisanlage mit einer gleisfahrbaren Oberbaumaschine mit einer Steuermessanlage zum Messen der zu korrigierenden Gleislage vor einer Hebe- Richteinrichtung, mit einer Abnahmemessanlage zum Vermessen der korrigierten Gleislage nach der Hebe- Richteinrichtung und mit zugeordneten Ausgabeeinheiten zur Darstellung der Messwerte, wobei die Hebe- Richteinrichtung in Abhängigkeit der Messwerte von Steuermessanlage und Abnahmemessanlage im Sinne eines Erzielens einer vorgegebenen Gleis-Soll-Geometrie angesteuert wird, **dadurch gekennzeichnet, dass** die Gleis-Soll-Geometrie in Form eines Krümmungsbildes ($k_{(s)}$, 2) eines Längshöhenbildes ($h_{(s)}$, 4) und eines Überhöhungsbildes ($u_{(s)}$, 3) vorgegeben wird, und dass zunächst aus dem Krümmungsbild ($k_{(s)}$, 2), dem Längshöhenbild ($h_{(s)}$, 4) und dem Überhöhungsbild ($u_{(s)}$, 3) der Gleis-Soll-Geometrie ein dreidimensionales Lagebild errechnet wird, dass das dreidimensionale Lagebild (19) in eine perspektivische Darstellung gebracht und mit der Ausgabeeinheit dargestellt wird und dass das perspektivische Lagebild um gemessene Fehlerverläufe für die Gleisparameter Gleisrichtung (39), Überhöhung (23), Verwindung (49) und Längshöhe (20) ergänzt wird.

2. Verfahren nach Anspruch 1, **dadurch gekennzeichnet, dass** der Gleis-Soll-Geometrie Synchropunkte (36, 34, 41) zugeordnet werden, die an den entsprechenden Positionen der perspektivischen Darstellung des Gleisverlaufes dargestellt werden, wobei bei Erreichen der Synchropunkte mit der Oberbaumaschine eine Synchronisation der tatsächlichen Synchropunkte an der Gleisanlage mit den virtuellen Synchropunkten der perspektivischen Darstellung (C) erfolgt.

3. Verfahren nach Anspruch 1 oder 2, **dadurch gekennzeichnet, dass** die Position der Oberbaumaschine (28, 29) in der Darstellung der Ausgabeeinheit und die Darstellung der aktuellen Fehlerwerte (21, 26, 27, 39) mit Fortfahren der Maschine fortlaufend dargestellt werden.

4. Verfahren nach einem der Ansprüche 1 bis 3, **dadurch gekennzeichnet, dass** der Verlauf der Restfehler (44, 45, 42, 43) abhängig von den gemessenen Fehlerverläufen und den getätigten Regelungseingriffen vorberechnet und in der Darstellung sichtbar gemacht wird.

5. Verfahren nach einem der Ansprüche 1 bis 4, **dadurch gekennzeichnet, dass** die Gleislage vor der Oberbaumaschine mit einer Bildaufnahmeeinrichtung aufgezeichnet wird, dass die Lage der Schienen mit einer Bildauswertung berechnet wird und dass die berechnete Lage der Schienen und die Gleis-Soll-Geometrie (19) perspektivisch im Lagebild dargestellt werden.

6. Verfahren nach einem der Ansprüche 1 bis 5, **dadurch gekennzeichnet, dass** Synchropunkte (36, 34, 41) vor der Oberbaumaschine mit einer Bildaufnahmeeinrichtung aufgezeichnet werden und in das perspektivische Bild (C) ab einer vorzuwählenden Annäherung zur Synchronisierung eingeblendet werden.

7. Verfahren nach einem der Ansprüche 1 bis 6, **dadurch gekennzeichnet, dass** der Verlauf der Abweichungen der zu korrigierenden Gleislage von der Sollage berechnet wird, dass Trends errechnet und auf der Ausgabeeinheit zur Anzeige gebracht werden, um durch eine zeitgerechte Einflussnahme auf die Hebe-Richteinrichtungen ein Einhalten von Toleranzen gewährleisten zu können.

8. Verfahren nach einem der Ansprüche 1 bis 7, **dadurch gekennzeichnet, dass** Korrekturen der errechneten Abweichungen, der zu korrigierenden Gleislage von der Sollage vor der Hebe- Richteinrichtung, von einer Steueranlage der Hebe- Richteinrichtung vorgenommen werden.

**9.** Verfahren nach einem der Ansprüche 1 bis 8, **dadurch gekennzeichnet, dass** das perspektivische Bild über einen Head-Up-Projektor auf die Frontscheibe der Oberbaumaschine geworfen und/oder das mit einer Datenbrille dargestellt wird.

**10.** Verfahren nach einem der Ansprüche 1 bis 9, **dadurch gekennzeichnet, dass** das perspektivische Bild über eine Funk-Datenleitung an eine räumlich vom Einsatzort der Oberbaumaschine entfernte Leitstelle zur Überwachung des Arbeitsfortschrittes übertragen wird, wobei die Arbeiten gegebenenfalls von der Leitstelle ferngesteuert erfolgen.

**Claims**

**1.** Method for measuring and displaying the track geometry of a track system using a track-ridable permanent-way machine, having a control measurement system for measuring the track position to be corrected upstream of a lifting and aligning device, having an acceptance measurement system for measuring the corrected track position downstream of the lifting and aligning device, and having associated output units for displaying the measured values, wherein the lifting and aligning device is activated in dependence upon on the measured values of the control measurement system and acceptance measurement system so as to achieve a specified desired track geometry, **characterised in that** the desired track geometry is specified in the form of a curvature image ($k_{(s)}$, 2), a longitudinal level image ($h_{(s)}$, 4) and superelevation image ($u_{(s)}$, 3), and **in that** initially a three-dimensional position image is calculated from the curvature image ($k_{(s)}$, 2), the longitudinal level image ($h_{(s)}$, 4) and the superelevation image ($u_{(s)}$, 3) of the desired track geometry, **in that** the three-dimensional position image (19) is brought into a perspective display and is displayed with the output unit and **in that** the perspective position image is supplemented by measured error curves for the track parameters of track direction (39), superelevation (23), twist (49) and longitudinal level (20).

**2.** Method as claimed in claim 1, **characterised in that** synchronisation points (36, 34, 41) are allocated to the desired track geometry and are displayed at the corresponding positions of the perspective display of the track progression, wherein, when the synchronisation points are reached by the permanent-way machine, a synchronisation of the actual synchronisation points on the track system is carried out with the virtual synchronisation points of the perspective display (C).

**3.** Method as claimed in claim 1 or 2, **characterised in that** the position of the permanent-way machine (28, 29) in the display of the output unit and the display of the current error values (21, 26, 27, 39) are displayed continuously as the machine continues to travel.

**4.** Method as claimed in any one of claims 1 to 3, **characterised in that** the progression of the residual errors (44, 45, 42, 43) is pre-calculated depending upon the measured error curves and performed control interventions and is rendered visible in the display.

**5.** Method as claimed in any one of claims 1 to 4, **characterised in that** the track position upstream of the permanent-way machine is recorded with an image recording device, **in that** the position of the rails is calculated with image evaluation and **in that** the calculated position of the rails and the desired track geometry (19) are displayed in perspective in the position image.

**6.** Method as claimed in any one of claims 1 to 5, **characterised in that** synchronisation points (36, 34, 41) upstream of the permanent-way machine are recorded with an image recording device and are blended into the perspective image (C) from an approximation, to be preselected, for synchronisation.

**7.** Method as claimed in any one of claims 1 to 6, **characterised in that** the progression of the deviations of the track position to be corrected from the desired position is calculated, **in that** trends are calculated and are displayed on the output unit in order to be able to ensure adherence to tolerances by exerting an influence upon the lifting and aligning devices in a timely manner.

**8.** Method as claimed in any one of claims 1 to 7, **characterised in that** corrections of the calculated deviations of the track position to be corrected from the desired position upstream of the lifting and aligning device are carried out by a control system of the lifting and aligning device.

**9.** Method as claimed in any one of claims 1 to 8, **characterised in that** the perspective image is projected via a head-up projector onto the windscreen of the permanent-way machine and/or is displayed using smart glasses.

**10.** Method as claimed in any one of claims 1 to 9, **characterised in that** the perspective image is transmitted via a radio data line to a control centre, which is spatially remote from the operating location of the permanent-way machine, for monitoring the progress of work, wherein the work is optionally performed under remote control by the control centre.

## Revendications

**1.** Procédé pour mesurer et représenter la géométrie des rails d'une voie ferrée avec une machine de superstructure ferroviaire avec un système de mesure de contrôle pour mesurer la position à corriger des rails en amont d'un dispositif de levage et d'alignement, avec un système de mesure de saisie pour relever la position corrigée des rails en aval du dispositif de levage et d'alignement, et avec des unités de sortie associées pour la représentation des valeurs mesurées, le dispositif de levage et d'alignement étant commandé en fonction des valeurs mesurées du système de mesure de contrôle et du système de mesure de saisie en vue d'obtenir une géométrie souhaitée prédéterminée des rails, **caractérisé en ce que** la géométrie souhaitée des rails est prédéfinie sous forme d'une image de courbure ($k_{(s)}$, 2), d'une image de la hauteur longitudinale ($h_{(s)}$, 4) et d'une image du dévers ($u_{(s)}$, 3) et **en ce qu'**ensuite, on calcule à partir de l'image de la courbure ($k_{(s)}$, 2), de l'image de la hauteur longitudinale ($h_{(s)}$, 4) et de l'image du dévers ($u_{(s)}$, 3) de la géométrie souhaitée des rails une image de position en trois dimensions, **en ce que** l'image de position (19) en trois dimensions est mise en une représentation en perspective et est représentée avec l'unité de sortie, et **en ce que** l'image de position en perspective est complétée par des profils de défaut mesurés pour les paramètres alignement des rails (39), dévers (23), gauchissement (49) et hauteur longitudinale (20).

**2.** Procédé selon la revendication 1, **caractérisé en ce que** des points synchro (36, 34, 41) sont associés à la géométrie souhaitée des rails qui sont représentés au niveau des positions correspondantes de la représentation en perspective du tracé de rail, une synchronisation des points de synchro réels se produisant lors de l'obtention des points synchro avec la machine de superstructure, au niveau de la voie ferrée, avec les points synchro virtuels, de la représentation (C) en perspective.

**3.** Procédé selon la revendication 1 ou 2, **caractérisé en ce que** la position de la machine de superstructure (28, 29) dans la représentation de l'unité de sortie et la représentation des valeurs de défaut courantes (21, 26, 27, 39) sont représentées, en continu, la machine avançant.

**4.** Procédé selon l'une des revendications 1 à 3, **caractérisé en ce que** le tracé des défauts résiduels (44, 45, 42,43) est précalculé en fonction des tracés des défauts mesurés et des interventions régulatrices effectuées et est rendu visible dans la représentation.

**5.** Procédé selon l'une des revendications 1 à 4, **caractérisé en ce que** la position des rails est enregistrée en amont de la machine de superstructure avec un dispositif de capture d'image, de sorte que la position des rails est calculée avec une évaluation d'image et **en ce que** la position calculée des rails et la géométrie souhaitée des rails (19) sont représentées en perspective dans l'image de position.

**6.** Procédé selon l'une des revendications 1 à 5, **caractérisé en ce que** les points synchro (36, 34, 41) sont enregistrés en amont de la machine de superstructure avec un dispositif de capture d'image et sont affichés dans l'image (C) en perspective à partir d'un rapprochement à présélectionner pour synchronisation.

**7.** Procédé selon l'une des revendications 1 à 6, **caractérisé en ce que** l'évolution des écarts de la position à corriger des rails est calculé par la position souhaitée, **en ce que** des tendances sont calculées et affichées sur l'unité de sortie, afin de pouvoir garantir un respect des tolérances par une influence en temps opportun sur les dispositifs de levage et d'alignement.

**8.** Procédé selon l'une des revendications 1 à 7, **caractérisé en ce que** sont effectuées des corrections des écarts calculés de la position à corriger des rails, à partir de la position souhaitée, en amont du dispositif de levage et d'alignement par un système de commande du dispositif de levage et d'alignement.

**9.** Procédé selon l'une des revendications 1 à 8, **caractérisé en ce que** l'image en perspective est projetée par le biais d'un projecteur « tête haute » sur le pare-brise de la machine de superstructure et/ou affichée avec une lunette de données.

10. Procédé selon l'une des revendications 1 à 9, **caractérisé en ce que** l'image en perspective est transmise par le biais d'une communication de données par radio à un poste de contrôle central éloigné géographiquement du lieu d'utilisation de la machine de superstructure, pour surveillance de l'étape de travail, les opérations s'effectuant le cas échéant, commandées à distance, du poste de contrôle central.

## FIG. 1

## FIG.2

FIG.3

*FIG.4*

*FIG.5*

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3227724 A1